# FASCICULE DE BREVET EUROPEEN

(11) **EP 2 407 379 B1**
(45) Date de publication et mention de la délivrance du brevet: **31.07.2013**
(21) Numéro de dépôt: 11171388.9
(22) Date de dépôt: 24.06.2011
(51) Int. Cl.: B64D 13/00, F16L 27/12, F24F 13/02

(54) **Système d'aération pour aéronef**
Belüftungssystem für ein Luftfahrzeug
Ventilation system for an aircraft

(30) Priorité: 13.07.2010 FR 1002944
(43) Date de publication de la demande: 18.01.2012
(73) Titulaire: Airbus Operations, 31060 Toulouse (FR)
(72) Inventeur: Sabadie, Lionel, 31200 Toulouse (FR); Gracheva, Natalia, 31770 Colomiers (FR); Dal-Cin, Michel, 31880 La Salvetat, Saint Gilles (FR); Banis, Christian, 31490 Leguevin (FR)
(74) Mandataire: Santarelli

(56) Documents cités:
- WO-A1-2009/091328
- DE-A1- 19 827 681
- FR-A- 1 481 900
- GB-A- 859 057

## Description

La présente invention concerne un système d'aération pour aéronef.

La structure du fuselage d'un aéronef est usuellement constituée de cadres s'étendant dans des plans transversaux, de lisses s'étendant sensiblement selon une direction longitudinale de l'aéronef à l'extérieur des cadres, et d'une peau qui recouvre lesdites lisses et est fixée à celle-ci. La peau est également fixée aux cadres, par l'intermédiaire de pièces de liaison connues sous le nom de "clip" ou "stabilisateur".

Au niveau de la cabine notamment, les faces intérieures du fuselage sont recouvertes successivement par des matelas isolants, réalisant une isolation thermique et acoustique de la cabine, et par des panneaux de revêtement dont la face intérieure reste visible depuis la cabine et forme donc une face de finition. Entre deux cadres successifs du fuselage, la peau dudit fuselage est recouverte de matelas isolants appelés matelas de champ (en anglais : "field blankets"). Chaque cadre du fuselage est par ailleurs recouvert par un matelas appelé matelas de cadre (en anglais : "frame blanket"). Une zone de recouvrement peut être prévue entre des matelas de cadre et de champ consécutifs.

Entre les matelas isolants et les panneaux de revêtement sont agencés des systèmes (équipements, câbles électriques, réseaux hydrauliques et pneumatiques, ...).

Ces systèmes sont usuellement fixés à la structure du fuselage, par des dispositifs de fixation ponctuels traversant les matelas isolants recouvrant ladite structure. Ainsi par exemple, les câbles électriques sont fixés aux cadres du fuselage, à l'aide de dispositifs de fixation ponctuels comportant une tige qui traverse le cadre et le ou les matelas qui le recouvrent. Ces dispositifs de fixation ponctuels comportent également des rondelles de blocage de la tige de part et d'autre du cadre, et une patte dans laquelle vient s'engager un collier à serrage rapide recevant un ou plusieurs câbles. Les tuyaux prévus pour la circulation d'air conditionné sont quant à eux usuellement fixés aux lisses, à l'aide de dispositifs de fixation ponctuels comprenant un collier de serrage porté par un support fixé à une lisse par des vis ; ces vis traversent la lisse et le matelas de champ recouvrant cette dernière.

Les conduits prévus pour la circulation d'air conditionné sont généralement formés d'une seule pièce à section circulaire, du sol au plafond d'une cabine d'aéronef. De ce fait, les conduits d'air sont encombrants et peuvent donc être soumis à de nombreux chocs lors du transport. Enfin la grande taille des conduits rend leur manipulation peu aisée, ne permettant que peu de choix quant au moment de fixation du système d'aération lors de l'assemblage de l'aéronef.

Le document GB-859 057 décrit un système d'aération d'aéronef comportant un premier et un deuxième conduits disposés partiellement l'un dans l'autre entre la paroi extérieure et le revêtement intérieur de la structure de l'aéronef. L'air arrivant du plafond de l'aéronef est envoyé vers le plancher pour être distribué dans la cabine à une hauteur intermédiaire.

L'invention propose de remédier à ces inconvénients et de fournir un système d'aération pour aéronef peu encombrant, simple de montage et limitant les risques de chocs ou de dégradations durant le transport.

À cet effet, la présente invention propose un aéronef comprenant une structure comportant une paroi extérieure et un revêtement intérieur, ainsi qu'un système d'aération comprenant au moins un conduit comportant un premier et au moins un deuxième tubes disposés de manière télescopique entre ladite paroi extérieure et ledit revêtement intérieur, caractérisé en ce que lesdits premier et au moins un deuxième tubes peuvent coulisser de manière télescopique l'un par rapport à l'autre entre une position rétractée dans laquelle la majeure partie de l'un desdits tubes, constituant un tube extérieur, recouvre l'autre desdits tubes, constituant un tube intérieur, et une position d'extension dans laquelle la majeure partie du tube extérieur s'étend au-delà du tube intérieur..

Ceci permet de réduire considérablement l'espace occupé par le système d'aération durant le transport, tout en réduisant les risques de chocs ou de dégâts du fait que les tubes sont également plus compacts. Enfin la petite taille du système rend sa manipulation plus aisée, permettant une plus grande flexibilité lors des opérations d'assemblage et de maintenance.

Dans la description faite en références aux dessins ci-joints, le premier tube est un tube intérieur et les seconds tubes sont des tubes extérieurs. Toutefois, on peut aussi concevoir d'avoir un premier tube extérieur avec des seconds tubes intérieurs.

Selon un premier mode de réalisation, le conduit du système d'aération comporte une première paire de seconds tubes situés de part et d'autre du premier tube. Les seconds tubes de cette première paire de tubes sont par exemple de même longueur, sensiblement égale à la moitié de celle du premier tube. Un tel mode de réalisation présente l'avantage d'obtenir un système compact et résistant.

Une variante préférée prévoit que le conduit du système d'aération comporte une seconde paire de seconds tubes, chaque tube de cette seconde paire de tubes étant monté coulissant de manière télescopique par rapport à un second tube de la première paire de seconds tubes. En position rétractée, les seconds tubes de la première paire de tubes peuvent se rejoindre au milieu du premier tube, les seconds tubes les plus extérieurs recouvrant alors de préférence les autres seconds tubes sur la majorité au moins de leur longueur.

Afin de réaliser une bonne étanchéité entre les deux tubes montés coulissant l'un sur l'autre, un joint torique est avantageusement utilisé.

Après l'assemblage du système d'aération, afin d'assurer que les tubes restent en position étendue et ne glissent plus les uns dans les autres, chaque second tube comporte avantageusement un système de verrouillage permettant de le maintenir en position d'extension. Ceci permet notamment de faciliter le montage en empêchant les tubes de revenir en position rétractée et de sécuriser l'ensemble une fois le système monté.

Pour former un conduit compact pour le transport en position rétractée, les seconds tubes en contact avec le premier tube se rejoignent de préférence au milieu du premier tube.

Afin d'assurer la fixation du premier tube à la structure, le système comporte par exemple en outre un dispositif de maintien du système d'aération destiné à la fixation du premier tube sur la structure et comportant un collier enserrant ledit premier tube. Le système est alors solidarisé de manière efficace et sûre à la structure.

Habituellement, les tuyaux de système d'aération sont fixés aux lisses de la structure de l'aéronef à l'aide de dispositifs de fixation ponctuels comprenant un collier de serrage porté par un support fixé à une lisse par des vis. Afin de faciliter le montage, la présente invention prévoit que les seconds tubes du système d'aération de l'aéronef selon l'invention comportent par exemple sur leur paroi externe des moyens d'accrochage, tout comme la structure de l'aéronef qui comporte des moyens d'accrochage complémentaires destinés à recevoir les moyens d'accrochage d'un second tube correspondant lorsque le second tube est en position d'extension.

Enfin lorsque la structure de l'aéronef comporte des cadres, les moyens d'accrochage complémentaires sont avantageusement solidaires de ces cadres afin de réduire l'espace occupé par le système d'aération et assurer un bon maintien de celui-ci. Le premier tube peut également être fixé sur un tel cadre à l'aide par exemple d'un collier.

D'autres détails et avantages de la présente invention apparaîtront à la lecture de la description suivante, qui se réfère aux dessins schématiques annexés et porte sur des modes de réalisation préférentiels, fournis à titre d'exemples non limitatifs. Sur ces dessins :
La figure 1 représente une vue schématique en perspective d'un conduit selon l'invention en position déployée,
La figure 2 représente une vue schématique en perspective du conduit de la figure 1 en position rétractée,
La figure 3 représente une vue schématique en perspective d'un premier mode de réalisation d'un système de verrouillage d'un système d'aération selon l'invention,
La figure 4 représente une vue schématique en perspective d'un second mode de réalisation d'un système de verrouillage du système d'aération selon l'invention,
La figure 5 représente une vue schématique en perspective d'un détail d'un cadre sur lequel est fixé le système d'aération et d'un clip de fixation,
La figure 6 représente une vue schématique en perspective d'un détail du système d'aération selon l'invention présentant un support de fixation de tube extérieur du système selon l'invention,
La figure 7 représente une vue schématique en perspective d'ensemble du système d'aération, et
La figure 8 représente une vue en coupe des moyens de raccord du système d'aération au circuit extérieur d'aération.

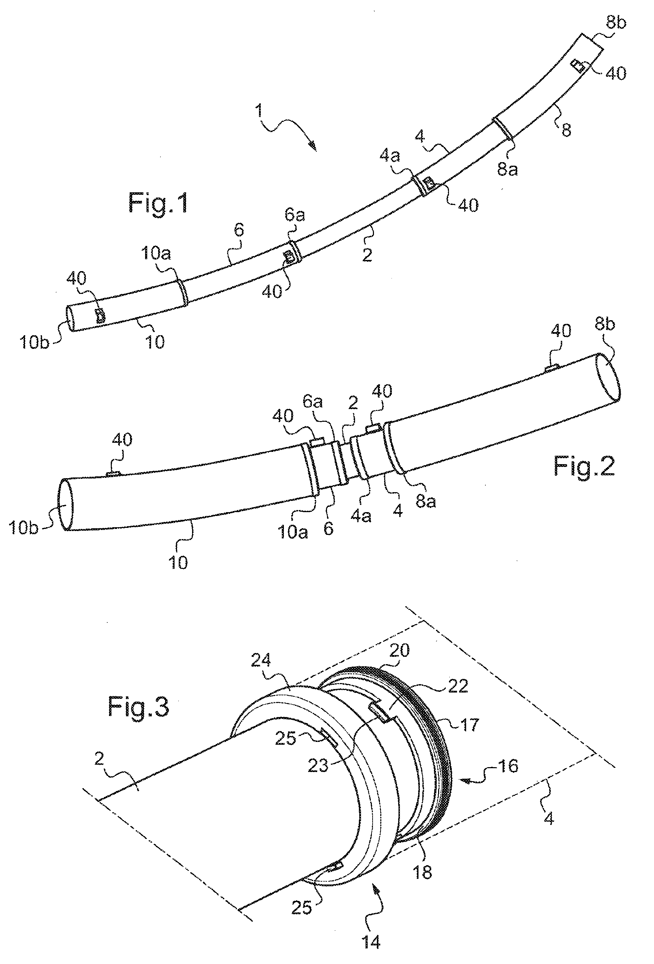

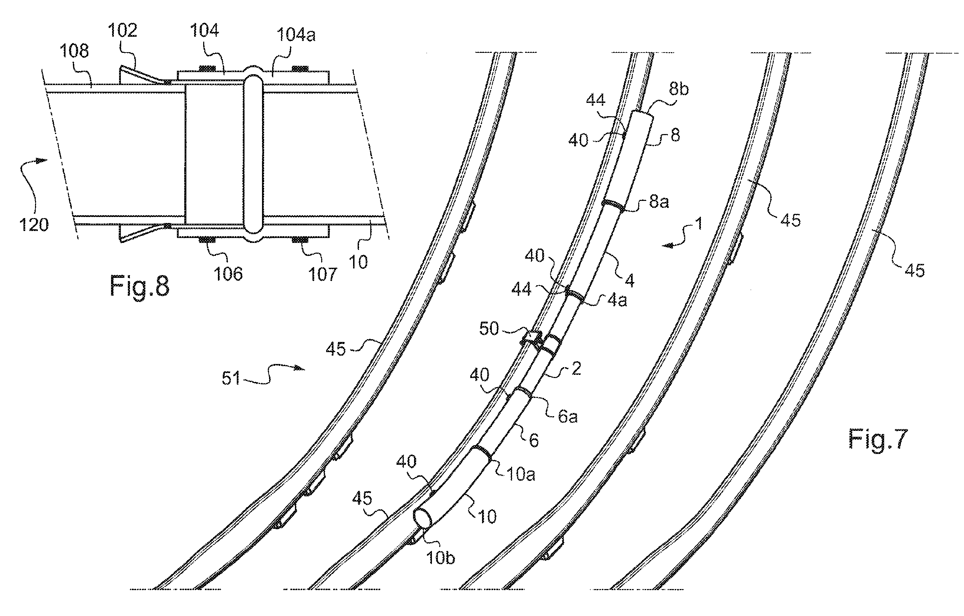

La figure 1 montre un conduit 1 de forme sensiblement cylindrique, incurvé le long de son axe fixé afin d'épouser une structure 51 (figure 7) à laquelle il est fixé en position d'assemblage.

Dans le mode de réalisation présenté figure 1, le conduit 1 est composé d'un premier tube, dit tube intérieur 2, de forme cylindrique incurvé comme dit précédemment. Deux premiers tubes extérieurs 4, 6, de diamètre supérieur au tube intérieur 2 et incurvés de façon à prolonger l'arc formé par le tube intérieur 2 pour épouser la forme de la structure, sont situés de part et d'autre dudit tube intérieur 2. Ils coulissent sur le tube intérieur 2, de façon à ce qu'en position rétractée, ils se rejoignent au milieu du tube intérieur 2 comme illustré dans la figure 2. Dans cette position rétractée, les deux tubes extérieurs 4, 6 peuvent soit venir au contact l'un de l'autre, soit laissé subsister un petit espace entre eux comme illustré. Dans cette position rétractée, la majeure partie de chacun des tubes extérieurs 4, 6 recouvre le tube intérieur 2 tandis que dans la position d'extension, la majeure partie des tubes extérieurs 4, 6 s'étend au-delà du tube intérieur 2. Les deux tubes extérieurs 4, 6 et le tube intérieur 2 sont ainsi montés de manière télescopique.

Les extrémités proximales 4a, 6a respectives des tubes extérieurs 4, 6 renferment notamment un joint torique 20 assurant l'étanchéité de la liaison entre le tube intérieur et le tube extérieur correspondant.

Dans le mode de réalisation décrit dans la figure 1, une seconde paire de tubes extérieurs 8, 10 de diamètre supérieur à celui de la première paire de tubes extérieurs 4, 6 sont en mesure de coulisser sur la première paire de tubes extérieurs 4, 6. Chaque tube extérieur 8, 10 respectivement de la seconde paire de tubes coulisse sur un tube 4, 6 respectivement de la première paire de tubes. Tous ces tubes sont incurvés de façon à prolonger l'arc formé par la première paire de tubes extérieurs 4,6 pour épouser la forme de la structure. Les extrémités proximales 8a, 10a respectives des seconds tubes extérieurs renferment également un joint torique.

Le conduit 1 en position rétractée est représenté figure 2. Dans cette position, la seconde paire de tubes extérieurs 8, 10 recouvre intégralement et respectivement la première paire de tubes extérieurs 4, 6 jusqu'à des moyens d'accrochage 40 situés sur la surface extérieure des tubes extérieurs 4, 6 qui exercent le rôle de butée. La première paire de tubes extérieurs 4, 6 recouvre de chaque côté le tube intérieur 2, par exemple de sorte à laisser un espace entre les extrémités proximales de ces tubes.

Un premier mode de réalisation du système de verrouillage des tubes extérieurs en position d'extension est détaillée figure 3. Ce premier système de verrouillage 14 comporte un premier anneau 16 situé à l'extrémité du tube intérieur 2. Cet anneau 16 comporte une base 17 et un prolongement 18. La base 17 comporte notamment une rainure permettant de loger un joint torique 20. Le prolongement 18 comporte des pattes 22 élastiques en extension selon l'axe du tube et dans la direction du centre du tube intérieur 2. Ces pattes sont par exemple au nombre de trois (seule une patte 22 est visible), de préférence réparties de façon régulière tous les 120° sur l'anneau 16, et sont chacune munies d'une dent 23. Le système de verrouillage 14 comporte en outre un second anneau 24 situé à l'extrémité du tube extérieur 4 en regard du premier anneau 16. Ce second anneau 24 comporte des ouvertures 25, par exemple au nombre de trois (seules deux ouvertures 25 sont visibles), réparties avantageusement de façon régulière tous les 120° sur l'anneau 24. Chaque ouverture 25 permet le passage d'une patte 22 et son accrochage par encliquetage à l'aide de la dent correspondante 23. Cet encliquetage assure le maintien du tube extérieur 4 en position d'extension.

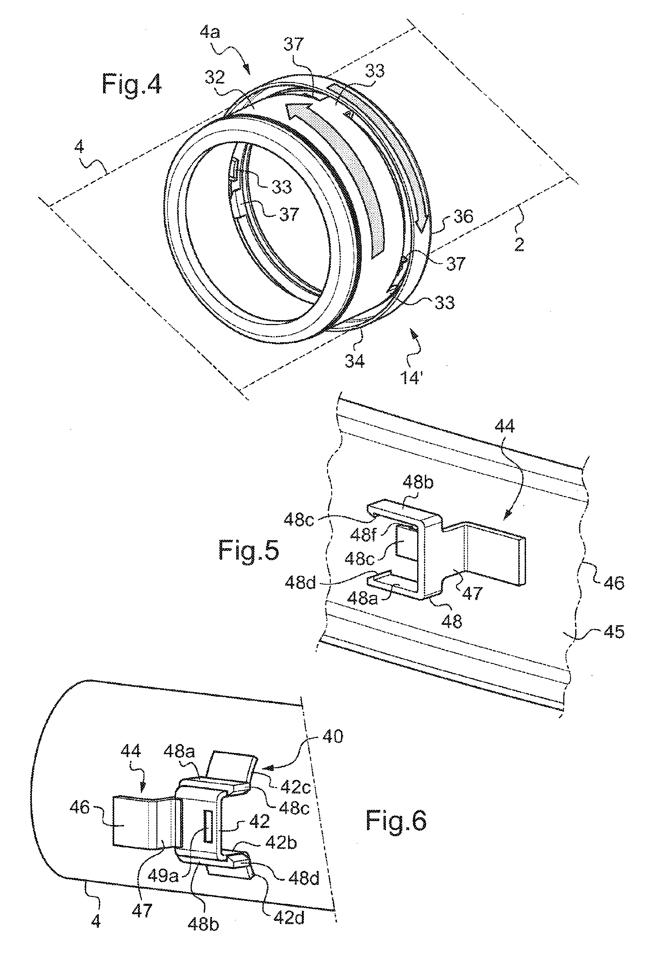

Un second mode de réalisation du système de verrouillage des tubes extérieurs en position d'extension est détaillé figure 4. Ce second système de verrouillage 14' comporte un premier anneau 32 situé à l'extrémité du tuyau intérieur 2. Cet anneau 32 comporte notamment une rainure permettant de loger un joint torique 34. L'anneau 32 comporte par ailleurs des ergots 33, par exemple au nombre de trois, répartis par de préférence de façon régulière tous les 120° sur l'anneau 32. Le second système de verrouillage 14' comporte en outre un second anneau 36 situé à l'extrémité du tuyau extérieur 4 en regard du premier anneau 32. Ce second anneau 36 comporte notamment des crans 37, par exemple au nombre de trois et de préférence répartis de façon régulière tous les 120° sur l'anneau 36. Afin d'assurer le verrouillage, les ergots 33 s'engagent par rotation dans les crans 37 correspondants prévus à cet effet. Une butée au fond des crans 37 assure un bon positionnement des ergots dans les crans et un encliquetage permet de les maintenir dans cette position verrouillée. Cet engagement par rotation assure le maintien du tube extérieur 4 en position d'extension.

Un élément des moyens d'accrochage complémentaires de la structure 51 est illustré figure 5. La structure 51 comporte notamment un cadre 45, auquel est solidarisé un élément d'accrochage 44 par l'intermédiaire d'une patte 46 en forme d'équerre, dirigée le long de l'axe du cadre. La partie saillante 47 non solidaire du cadre de la patte 46 porte une fourche 48 comportant trois branches 48a, 48b, 48c s'étendant dans le sens opposé du prolongement de la patte 46. La branche 48c est décalée par rapport aux branches 48a et 48b vers le cadre 45, se trouvant par exemple au centre de la partie saillante 47. La branche 48c est munie d'une dent 48f permettant l'encliquetage dans une ouverture prévue à cet effet dans un moyen d'accrochage 40 solidaire d'un tube extérieur correspondant (figure 6). Les deux branches 48a et 48b sont respectivement munies d'une dent 48d, 48e permettant une fixation complémentaire au moyen d'accrochage complémentaire 40.

Un élément des moyens d'accrochage complémentaires solidaires d'un tube extérieur est présenté figure 6, en position d'accroche avec l'élément 44. Cet élément d'accrochage 40 solidaire du tube 4 comporte une base 42 de forme sensiblement rectangulaire, muni de deux flancs 42a, 42b s'étendant de façon perpendiculaire à la base 42, vers la surface du tube extérieur 4, de manière à ce que l'ensemble de la base et des flancs ait une section en forme de U. Ces flancs sont supportés par deux pattes 42c, 42d solidaires du tube extérieur 4, s'étendant chacune sur la surface du tube de manière à épouser sur une courte distance sa forme circulaire. Le corps 42 comporte une ouverture 42e proche de sa périphérie, par exemple de forme rectangulaire, dans laquelle vient s'insérer la dent 48f de la branche 48c de la fourche 48 de l'élément d'accrochage 44. En plus de cette première fixation, les deux autres branches 48a, 48b de la fourche 48 viennent s'accrocher par l'intermédiaire de leurs dents 48c, 48d respectivement aux rebords des flancs 42a, 42b, de façon à être en contact avec ces flancs sur toute leur longueur.

Le système d'aération dans son ensemble fixé sur une structure d'aéronef est présenté figure 7. Cette structure comporte des cadres 45, par exemple de section en forme de Z. Sur cette figure 7, les cadres sont au nombre de quatre mais un seul conduit 1 est montré en position déployée. Le conduit 1 est monté sur le cadre 45 par l'intermédiaire les moyens d'accrochage 44 (seuls deux d'entre eux sont représentés) situés sur la surface du cadre 45 sur laquelle il est fixé, encliquetés sur les moyens d'accrochage 40 respectivement situés sur les surfaces externes des tubes extérieurs 4, 6, 8, 10. Le conduit 1 est en outre retenu au cadre 45 par l'intermédiaire d'un système d'accrochage 50 comportant un collier enserrant le tube intérieur 2 en sa partie centrale.

Les extrémités distales 8b, 10b respectivement de la seconde paire de tubes extérieurs 8, 10 représentées figure 1 comportent des moyens de raccord au réseau d'air de l'aéronef comme illustré en figure 8. Ces moyens de raccord assurent la connexion du conduit 1 au réseau d'aération de l'aéronef 120. Un tuyau 108 du réseau d'aération est relié au tube extérieur 10 du conduit 1 par l'intermédiaire d'une partie conique 102 dans laquelle il s'insère. Cette partie conique est composée d'un manchon cylindrique, évasé à son extrémité en contact avec le tuyau 108 de façon à former un cône, et est munie d'un joint interne. Elle permet notamment de corriger une éventuelle erreur d'alignement. Un joint 104 assure l'étanchéité de la liaison entre le tube extérieur 10 du conduit 1 et le tuyau 108 du réseau d'aération. Il est composé d'un manchon cylindrique s'étendant de part et d'autre d'une partie jointive 104a située autour de la surface de contact entre le tube extérieur 10 et le tuyau 108. Ce joint 104 est placé de part et d'autre de la surface de contact entre ces deux éléments, par-dessus la partie conique 102 du côté du réseau 120 et directement sur le tube extérieur 10 du côté du conduit 1. Il est par exemple réalisé en fibres de verre enduites de silicone. Deux brides 106, 107 disposées de part et d'autre de la partie jointive 104a, par exemple de façon symétrique, permettent de sécuriser l'ensemble.

Pour la mise en oeuvre d'un conduit 1 tel que décrit ci-dessus, une fois le tube intérieur 2 fixé sur un cadre 45, il suffit de faire coulisser les tubes extérieurs et de venir les accrocher dans les moyens d'accrochage complémentaires prévus sur la structure pour installer ledit conduit. Les extrémités libres des tubes extérieurs sont alors raccordées au reste du système d'aération comme décrit plus haut.

La mise en oeuvre d'un système d'aération selon la présente invention permet un gain de temps sensible lors du montage. Le montage, ainsi que la manutention sont facilités car des conduits moins longs sont à manipuler. En outre, le fait de ne pas être gêné lors du montage par de longs éléments permet une plus grande flexibilité dans l'ordre de montage des différents systèmes et autres éléments. De plus, le démontage et/ou le remplacement d'un conduit télescopique décrit précédemment est facilement et rapidement réalisable.

L'homme du métier remarque immédiatement à la lecture de la description qui précède que le conduit télescopique décrit peut être utilisé pour réaliser plusieurs longueurs. Si les tubes extérieurs ne sont pas entièrement déployés, ils forment alors un conduit de longueur moindre. Une standardisation peut donc ainsi être apportée. Au lieu de prévoir des conduits de longueurs différentes, ou d'avoir à adapter sur le chantier de montage la longueur d'un conduit, un seul type de conduit comme décrit plus haut peut être utilisé.

Le montage d'un système d'aération selon la présente invention n'a pas d'impact sur la structure de l'aéronef. Les éléments d'accrochage complémentaires, de même que les moyens pour la fixation du tube intérieur, peuvent être collés sur les cadres, ce qui n'affaiblit donc pas la structure.

Bien entendu, la présente invention ne se limite pas aux formes de réalisation décrites ci-dessus à titre d'exemples non limitatifs. Elle concerne également toutes les variantes de réalisation à la portée de l'homme du métier dans le cadre des revendications ci-après.

## Revendications

1. Aéronef comprenant une structure comportant une paroi extérieure et un revêtement intérieur, ainsi qu'un système d'aération comprenant au moins un conduit comportant un premier (2) et au moins un deuxième tubes (4, 6 ; 8, 10) disposés de manière télescopique entre ladite paroi extérieure et ledit revêtement intérieur, **caractérisé en ce que** lesdits premier (2) et au moins deuxième tubes (4, 6 ; 8, 10) peuvent coulisser de manière télescopique l'un par rapport à l'autre entre une position rétractée dans laquelle la majeure partie de l'un desdits tubes, constituant un tube extérieur (4, 6 ; 8, 10), recouvre l'autre desdits tubes, constituant un tube intérieur (2), et une position d'extension dans laquelle la majeure partie du tube extérieur (4, 6 ; 8, 10) s'étend au-delà du tube intérieur (2).

2. Aéronef selon la revendication 1, **caractérisé en ce que** le conduit comporte une première paire de seconds tubes (4, 6) situés de part et d'autre du premier tube (2), et **en ce que** les seconds tubes (4, 6) de cette première paire de tubes sont de même longueur, sensiblement égale à la moitié de celle du premier tube (2).

3. Aéronef selon la revendication 2, **caractérisé en ce que** le conduit (1) comporte une seconde paire de seconds tubes (8, 10), chaque tube de cette seconde paire de tubes étant monté coulissant de manière télescopique par rapport à un second tube de la première paire de seconds tubes (4, 6), et **en ce qu'**en position rétractée, les seconds tubes (4, 6) de la première paire de tubes se rejoignent au milieu du premier tube (2), et **en ce que** les seconds tubes (8, 10) les plus extérieurs recouvrent les autres seconds tubes (4, 6) sur la majorité au moins de leur longueur.

4. Aéronef selon l'une quelconque des revendications précédentes, **caractérisé en ce que** l'étanchéité entre deux tubes montés coulissant l'un sur l'autre est réalisée à l'aide d'un joint torique (20).

5. Aéronef selon l'une quelconque des revendications précédentes, **caractérisé en ce que** chaque second tube comporte un système de verrouillage permettant de le maintenir en position d'extension.

6. Aéronef selon la revendication 1, **caractérisé en ce qu'**il comporte en outre un dispositif de maintien (50) du conduit destiné à la fixation du premier tube (2) sur la structure de l'aéronef comportant un collier enserrant ledit premier tube (2).

7. Aéronef selon l'une quelconque des revendications 1 à 6, **caractérisé en ce que** les seconds tubes comportent sur leur paroi externe des moyens d'accrochage (40), et **en ce que** la structure de l'aéronef comporte des moyens d'accrochage complémentaires (44) destinés à recevoir les moyens d'accrochage (40) d'un second tube correspondant lorsque le second tube est en position d'extension.

8. Aéronef selon la revendication 7, **caractérisé en ce que** sa structure comporte des cadres (45) portant la paroi extérieure et le revêtement intérieur, et **en ce que** les moyens d'accrochage complémentaires (44) sont solidaires des cadres (45).

9. Aéronef selon l'une des revendications 1 à 8, **caractérisé en ce que** sa structure comporte des cadres portant la paroi extérieure et le revêtement intérieur, et **en ce que** chaque premier tube (2) est fixé sur un cadre correspondant à l'aide d'un collier.

## Patentansprüche

1. Luftfahrzeug mit einem Aufbau, der eine Außenwand und eine Innenverkleidung aufweist, sowie mit einem Lüftungssystem, das zumindest eine Leitung mit einem ersten (2) und zumindest einem zweiten Rohr (4, 6; 8, 10) aufweist, die zwischen der Außenwand und der Innenverkleidung teleskopartig angeordnet sind,
**dadurch gekennzeichnet, dass** das erste (2) und das zumindest eine zweite Rohr (4, 6; 8, 10) zwischen einer eingezogenen Stellung, in welcher der Großteil des einen der Rohre, welches ein äußeres Rohr (4, 6; 8, 10) bildet, das andere der Rohre, welches ein inneres Rohr (4, 6; 8, 10) bildet, überdeckt, und einer ausgezogenen Stellung, in welcher der Großteil des äußeren Rohrs (4, 6; 8, 10) sich über das innere Rohr (2) hinaus erstreckt, teleskopartig zueinander gleitbeweglich sind.

2. Luftfahrzeug nach Anspruch 1,
**dadurch gekennzeichnet, dass** die Leitung ein erstes Paar von zweiten Rohren (4, 6) aufweist, die beiderseits des ersten Rohrs (2) liegen, und dass die zweiten Rohre (4, 6) dieses ersten Paares von Rohren von gleicher Länge sind, die im Wesentlichen gleich der halben Länge des ersten Rohres (2) ist.

3. Luftfahrzeug nach Anspruch 2,
**dadurch gekennzeichnet, dass** die Leitung (1) ein zweites Paar von zweiten Rohren (8, 10) aufweist, wobei jedes Rohr dieses zweiten Paares von Rohren bezüglich eines zweiten Rohres des ersten Paares von zweiten Rohren (4, 6) teleskopartig verschiebbar gelagert ist,
dass in der eingezogenen Stellung die zweiten Rohre (4, 6) des ersten Paares von Rohren in der Mitte des ersten Rohres (2) aufeinandertreffen und dass die äußersten zweiten Rohre (8, 10) die weiteren zweiten Rohre (4, 6) zumindest über den Großteil ihrer Länge überdecken.

4. Luftfahrzeug nach einem der vorangehenden Ansprüche,
**dadurch gekennzeichnet, dass** die Dichtheit zwischen zwei aneinander verschiebbar gelagerten Rohren mit Hilfe von einer Ringdichtung (20) gewährleistet wird.

5. Luftfahrzeug nach einem der vorangehenden Ansprüche,
**dadurch gekennzeichnet, dass** jedes zweite Rohr ein Verriegelungssystem aufweist, mit dem es in ausgezogener Stellung gehalten werden kann.

6. Luftfahrzeug nach Anspruch 1,
**dadurch gekennzeichnet, dass** es ferner eine Haltevorrichtung (50) der Leitung aufweist, die dazu bestimmt ist, das erste Rohr (2) an dem Aufbau des Luftfahrzeugs zu befestigen, und eine Schelle aufweist, welche das erste Rohr (2) umspannt.

7. Luftfahrzeug nach einem der Ansprüche 1 bis 6,
**dadurch gekennzeichnet, dass** die zweiten Rohre an ihrer Außenwand Verhakungsmittel (40) aufweisen und dass der Aufbau des Luftfahrzeugs komplementär ausgeführte Verhakungsmittel (44) aufweist, die dazu bestimmt sind, die Verhakungsmittel (40) eines entsprechenden zweiten Rohres aufzunehmen, wenn das zweite Rohr in der ausgezogenen Stellung ist.

8. Luftfahrzeug nach Anspruch 7,
**dadurch gekennzeichnet, dass** sein Aufbau Spante (45) aufweist, welche die Außenwand und die Innenverkleidung tragen, und dass die komplementär ausgeführten Verhakungsmittel (44) fest mit den Spanten (45) verbunden sind.

9. Luftfahrzeug nach einem der Ansprüche 1 bis 8,
**dadurch gekennzeichnet, dass** sein Aufbau Spante aufweist, welche die Außenwand und die Innenverkleidung tragen, und dass jedes erste Rohr (2) mit Hilfe einer Schelle an einen entsprechenden Spant befestigt ist.

## Claims

1. An aircraft having a structure bearing an exterior wall and an interior covering, as well as a ventilation system having at least one duct comprising a first pipe (2) and at least a second pipe (4, 6; 8, 10) disposed telescopically between said exterior wall and said interior covering, **characterized in that** said first pipe (2) and said at least a second pipe (4, 6; 8, 10) are able to slide telescopically in relation to each other between a retracted position in which the greater part of one of said pipes, constituting an exterior pipe (4, 6; 8, 10), covers the other of said pipes, constituting an interior pipe (2), and an extended position in which the greater part of the exterior pipe (4, 6; 8, 10) extends beyond the interior pipe (2).

2. An aircraft according to claim 1, **characterized in that** the duct comprises a first pair of second pipes (4, 6) situated on opposite sides of the first pipe (2), and **in that** the second pipes (4, 6) of this first pair of pipes are of the same length, substantially equal to half that of the first pipe (2).

3. An aircraft according to claim 2, **characterized in that** the duct (1) comprises a second pair of second pipes (8, 10), each pipe of this second pair of pipes being mounted to slide telescopically in relation to a second pipe of the first pair of second pipes (4, 6), and **in that** in retracted position, the second pipes (4, 6) of the first pair of pipes meet at the middle of the first pipe (2), and **in that** the outermost second pipes (8, 10) cover the other second pipes (4, 6) over at least most of their length.

4. An aircraft system according to any one of the preceding claims, **characterized in that** the sealing between two pipes mounted to slide on one another is produced with the aid of an O-ring seal(20).

5. An aircraft according to any one of the preceding claims, **characterized in that** each second pipe comprises a locking system making it possible to hold it in extended position.

6. An aircraft according to claim 1, **characterized in that** it further comprises a holding device (50) for the duct adapted for fastening the first pipe (2) onto the structure of the aircraft comprising a collar clamping said first pipe (2).

7. An aircraft according to any one of claims 1 to 6, **characterized in that** the second pipes comprise attachment means (40) on their outer wall, and **in that** the structure of the aircraft comprises complementary attachment means (44) adapted to receive the attachment means (40) for a corresponding second pipe when the second pipe is in extended position.

8. An aircraft according to claim 7, **characterized in that** its structure comprises frames (45) bearing the exterior wall and the interior covering, and **in that** the complementary attachment means (44) are joined to the frames (45).

9. An aircraft according to one of claims 1 to 8, **characterized in that** its structure comprises frames bearing the exterior wall and the interior covering, and **in that** each first pipe (2) is fastened onto a corresponding frame with the aid of a collar.
